# DEMANDE DE BREVET EUROPEEN

(11) **EP 0 844 776 A1**
(43) Date de publication de la demande: **27.05.1998**
(21) Numéro de dépôt: 97203522.4
(22) Date de dépôt: 12.11.1997
(51) Int. Cl.: H04M 1/72

(54) **Procédure de validation d'un appareil téléphonique sans fil à la station de base**

(30) Priorité: 22.11.1996 FR 9614316
(71) Demandeur: Philips Electronics N.V., 5621 BA Eindhoven (NL)
(72) Inventeur: Touzeau, Patrick, 75008 Paris (FR)
(74) Mandataire: Chaffraix, Jean

(57) **Abrégé**

Ce dispositif téléphonique comporte une base (10) et des appareils mobiles (12, 14) susceptibles de se rattacher à cette base. Pour le rattachement, on utilise le procédé suivant :
- affectation d'une marque de rattachement à la base,
- saisie de cette marque par l'utilisateur de l'appareil mobile à rattacher,
- transmission de cette marque saisie à la base,
- vérification de cette marque saisie au niveau de la base,
- validation de l'appareil mobile.

Application : téléphones sans fil.

## Description

L'invention concerne un dispositif de télécommunication comportant une base et au moins un appareil mobile susceptible de se rattacher à ladite base.

L'invention concerne aussi un procédé de rattachement d'un appareil mobile à une base.

De tels appareils, connus sous le nom de postes téléphoniques sans fils, sont d'un usage courant et procurent un grand confort d'utilisation aux usagers par le nombre de fonctions qu'ils offrent à leurs utilisateurs.

Un problème qui se pose avec ce genre d'appareil est celui du rattachement d'un appareil mobile à une base. Lorsque l'on veut faire ce rattachement, il faut le faire valider auprès de la base.

Cette procédure de validation pour des appareils connus s'effectue en la déclenchant à partir de la base. Celle-ci invite alors, par une séquence de signaux qui est diffusée dans un environnement relativement large, tous les mobiles qui la reçoivent à se rattacher. Ceci présente un grave inconvénient. Un appareil mobile appartenant à un voisin malhonnête du propriétaire de la base peut saisir cette séquence et ainsi, se faire valider de sorte que les communications qu'il établira seront facturées, ensuite, au propriétaire de la base qui a déclenché la procédure de validation.

L'invention propose un dispositif du genre mentionné dans le préambule qui évite dans une large mesure l'inconvénient précité.

Pour cela, un tel dispositif est remarquable en ce qu'une marque de rattachement est affectée à la base, en ce que l'appareil mobile à rattacher comporte des moyens de saisie de cette marque par l'utilisateur et en ce que cette marque saisie doit être reconnue par la base pour valider le rattachement.

La description suivante, faite en regard des dessins ci-annexés, le tout donné à titre d'exemple non limitatif fera bien comprendre comment l'invention peut être réalisée.
La figure 1 montre un dispositif conforme à l'invention.
Les figures 2 et 3 sont des diagrammes pour expliquer respectivement le fonctionnement d'un appareil mobile et d'une base.

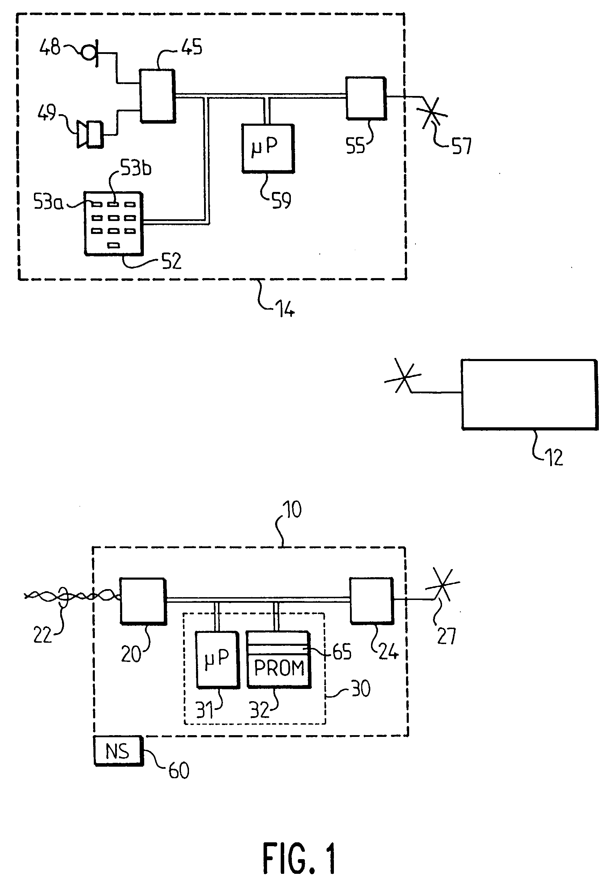

Le dispositif montré à la figure 1 est un téléphone sans fil du genre connu sous le nom CTO. Il est formé d'une base 10 et de deux appareils mobiles 12 et 14.

La base 10 est formée d'un circuit de connexion 20 pour permettre une connexion avec une ligne téléphonique 22. Elle est formée aussi par un circuit d'émission-réception 24, couplé à une antenne 27, pour communiquer avec les différents appareils mobiles qui lui sont rattachés par voie radioélectrique. Dans le cadre de l'exemple décrit, seul l'appareil mobile 12 est rattaché. La base 10 comporte, aussi, un ensemble à microprocesseur 30 qui déroule des instructions pour mettre en oeuvre, notamment, les moyens préconisés par l'invention. Cet ensemble 30 comporte notamment le microprocesseur 31 proprement dit et une mémoire morte 32. Le rattachement à une base permet à celle-ci de vérifier que l'accès à la ligne téléphonique 22 est accordé à tout appareil mobile qu'elle reconnaît.

L'appareil 14 de structure identique à celle de l'appareil 12 est montré plus en détail sur cette figure 1. Cet appareil 14 doit être rattaché à la base 10 selon les mesures de l'invention. Cet appareil comporte un circuit vocal 45 auquel sont raccordés un microphone 48 et un écouteur 49. Il comporte aussi un clavier 52 muni d'une pluralité de touches 53a, 53b, ..., un circuit d'émission-réception 55 couplé à une antenne 57 et un ensemble de gestion à microprocesseur 59 qui déroule des instructions pour mettre en oeuvre, notamment, les moyens préconisés par l'invention et qui assure donc le fonctionnement de l'appareil.

Conformément à l'invention, une marque de rattachement est affectée à la base, par exemple son numéro de série NS gravé sur son arrière, ceci est indiqué par la référence 60 sur la figure 1. Ce numéro est aussi reporté dans un emplacement 65 de la mémoire 32 pour des comparaisons ultérieures. L'utilisateur doit taper sur le clavier 52 ce numéro de série qui est ensuite émis vers la base 10 en empruntant la voie radioélectrique. La base vérifie alors ce numéro et le rattachement de cet appareil est validé.

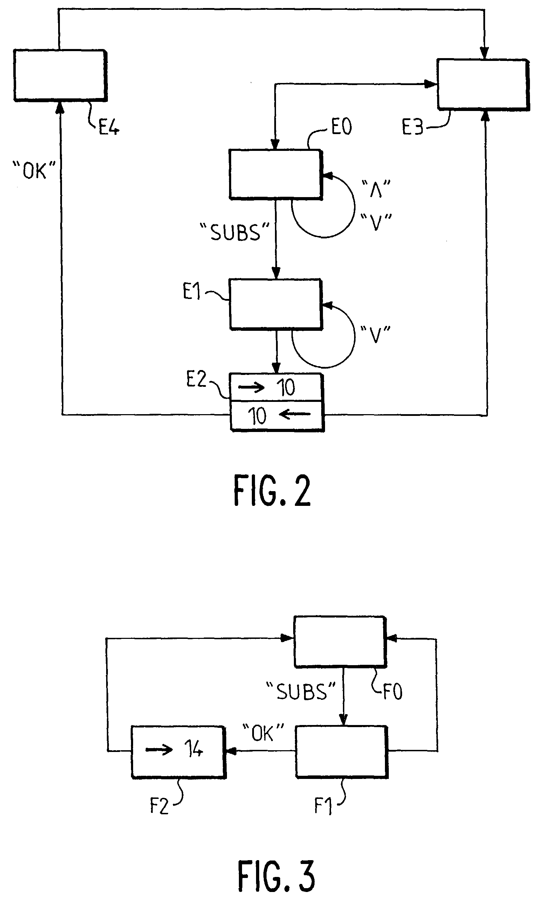

Le fonctionnement d'un tel dispositif est expliqué à l'aide de la figure 2. Cette figure 2 montre différents états de fonctionnement de l'appareil mobile qui tente de se rattacher à sa base. On commence à l'état E0 qui indique le choix d'un item d'un menu. En manoeuvrant les touches "∧" et "∨" de défilement, on finit par arriver dans le sous-menu 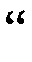 SUBS 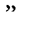 qui permet le rattachement. On passe ensuite à l'état E1 sur action de l'utilisateur (validation), qui est l'état qui permet la saisie du numéro de série NS utilisé pour l'identification de la base. Durant cette saisie on peut aussi utiliser la touche "∨" pour autoriser la correction. Ce nombre saisi après validation, on passe à l'état E2 qui consiste en la transmission de ce code vers la base dans une première étape et en la réception d'un éventuel message de la base. Si celle-ci ne répond pas ou si elle est occupée par une transmission avec un autre appareil mobile, ou bien si elle déclare que le code saisi est un mauvais code on passe alors à l'état E3 qui est l'état de repos de l'appareil mobile. Si la base déclare que le code saisi est bon (OK), alors on passe à l'état E4 qui est un état de temporisation pour laisser le temps à la base 10 d'enregistrer son appareil mobile et d'envoyer vers le mobile un code d'identification que ce dernier mémorise. L'appareil mobile passe alors à l'état précité E3.

Le fonctionnement de la base est explicité à l'aide de la figure 3. On part de l'état F0 qui est considéré comme l'état de repos de la base susceptible de recevoir des messages de différents appareils mobiles. La réception d'un message " SUBS " signifiant qu'un rattachement est demandé fait passer la base 10 à l'état F1. Dans cet état la base examine si le code de rattachement correspond bien à celui contenu dans l'emplacement 65 de la mémoire 32. Si oui alors, après validation effectuée manuellement sur la base de l'utilisateur, on passe à l'état F2 où l'on envoie un code d'identification à l'appareil mobile. Si non on retourne à l'état F0. Après l'état F2, on retourne aussi à l'état F0.

Ainsi, l'appareil mobile aura à transmettre ce code d'identification au préalable de chaque communication qu'il entreprendra. Si ce code n'est pas reconnu par la base cette communication ne pourra pas être établie.

## Revendications

1. Dispositif téléphonique comportant une base et au moins un appareil mobile susceptible de se rattacher à ladite base, caractérisé en ce qu'une marque de rattachement est affectée à la base, en ce que l'appareil mobile à rattacher comporte des moyens de saisie de cette marque par l'utilisateur et en ce que cette marque saisie doit être reconnue par la base pour valider le rattachement.

2. Dispositif téléphonique selon la revendication, 1 caractérisé en ce que la marque de rattachement est constituée par un numéro de série de la base.

3. Procédé de rattachement d'un appareil téléphonique à une base, caractérisé en ce qu'il comporte les étapes suivantes :
- affectation d'une marque de rattachement à la base,
- saisie de cette marque par l'utilisateur de l'appareil mobile à rattacher,
- transmission de cette marque saisie à la base,
- vérification de cette marque saisie au niveau de la base,
- validation de l'appareil mobile.

4. Procédé de rattachement selon la revendication 3, caractérisé en ce que la validation de l'appareil mobile consiste :
- à fournir un code d'identification à l'appareil mobile à rattacher,
- à mémoriser au niveau dudit appareil ledit code d'identification,
- à faire émettre, au préalable de chaque communication, par tout appareil mobile, le code d'identification mémorisé.
